# EUROPÄISCHE PATENTANMELDUNG

(11) **EP 1 537 973 A2**
(43) Veröffentlichungstag der Anmeldung: **08.06.2005**
(21) Anmeldenummer: 04027203.1
(22) Anmeldetag: 16.11.2004
(51) Int. Cl.: B29C 47/90

(54) **Kalibrierkorb**

(30) Priorität: 21.11.2003 DE 10354503
(71) Anmelder: Kiefel Extrusion Gmbh, 67547 Worms (DE)
(72) Erfinder: Hessenbruch, Rolf, 42855 Remscheid (DE)
(74) Vertreter: Zmyj, Erwin, Dipl.-Ing., Dipl.-Wirtsch.-Ing.

(57) **Zusammenfassung**

Kalibrierkorb in einer Blasfolienanlage, der als Berührungselement zum Folienschlauch mit kleinen Bürstenscheiben (16) ausgerüstet ist, deren Vorteil es ist, das sie im Kontaktbereich eine sehr kleine Kontaktfläche erzeugen und den Kühlluftstrom nicht vom Schlauch weg führen, sondern ihn am Schlauch (12) halten. Diese Lösung bietet ferner den Vorteil, zusätzlich noch mit Luft den Schlauch im Kalibrierkorbbereich kühlen zu lassen.

## Beschreibung

Die Erfindung betrifft einen Kalibrierkorb in Blasfolienanlagen, der benötigt wird, um bei Blasfolienanlagen mit Innenkühlung den Folienschlauch beim Extrudieren in seinem Durchmesser zu bestimmen und zu halten. Üblicherweise sind diese Kalibrierkörbe im Durchmesser verstellbar. Da sie den Schlauch berühren, sind die Kontaktstellen mit dem Folienschlauch als kleine Röllchen ausgebildet, die vom Schlauch angetrieben werden. Damit der Schlauch nicht an den Röllchen haftet, sind diese vorwiegend aus Kunststoff, vielfach aus Teflon. Diese Röllchen gewähren eine geringe Haftung und einen relativ leichten Lauf. Nachteilig bei dieser Lösung ist der Kontakt der Folie zu den Röllchen, weil dadurch der Kühlluftstrom unterbunden wird und aufgrund der Kontaktfläche unterschiedliche Auskühlungen entstehen können, da die Kontaktfläche mit der Folie nicht immer am Umfang gleichmäßig ist.

Zweck der vorliegenden Erfindung ist es, diese Nachteile zu vermeiden, indem statt der Kunststoffröllchen kleine Bürstenscheiben eingesetzt werden, deren Kontaktfläche sehr gering sind, da der Kontakt nur an den Borstenspitzen erfolgt. Ein weitere Vorteil besteht darin, dass die Kühlluft sehr einfach durch die Bürstenscheiben hindurch strömen kann und somit der Kühlluftstrom nicht unterbrochen wird. Dies führt zu einer wesentlich gleichmäßigeren Auskühlung der Folie und damit auch zu gleichmäßigeren Folieneigenschaften. Vorteilhaft ist ferner, dass die Bürstenrollen im Durchmesser etwas größer sind und dadurch bei vergleichbarem Gewicht leichter laufen bzw. angetrieben werden.

Anhand der in den beigefügten Zeichnungen dargestellten Ausführungsbeispielen wird die Erfindung näher erläutert. Es zeigen
- **Figur 1:**: schematisch eine Blasfolienanlage;
- **Figur 2:**: einen Teil eines Kalibrierkorbes;
- **Figur 3:**: eine erfindungsgemäße Bürstenscheibe;
- **Figur 4:**: einen Ausschnitt des erfindungsgemäßen Kalibrierkorbes;
- **Figur 5a und 5b:**: den Vergleich des bekannten und des erfindungsgemäßen Einbaus der Rollen;
- **Figur 6:**: eine zusätzliche Kühlmöglichkeit durch die Bürstenrollen;
- **Figur 7:**: eine weitere zusätzliche Kühlung des Folienschlauches;
- **Figur 8:**: eine Bürstenscheibe mit nach hinten gerichteten Borsten.

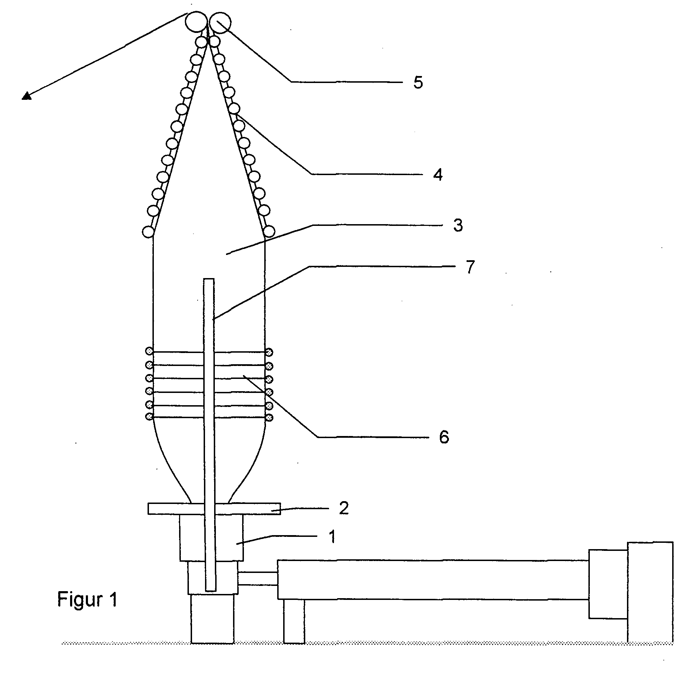

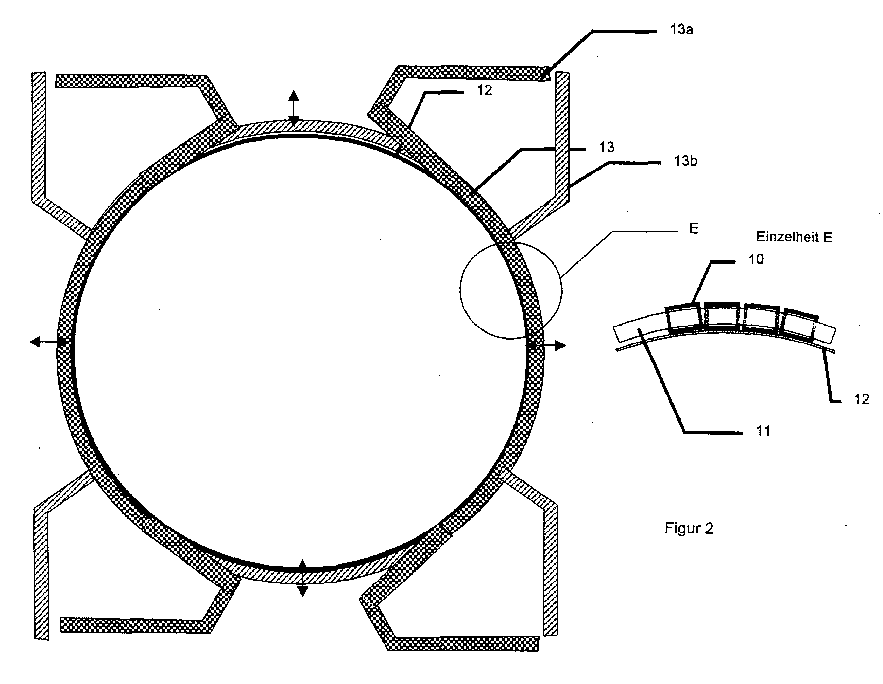

Figur 1 zeigt schematisch eine Blasfolienanlage. Aus einem Extruder wird die Kunststoffschmelze aus dem Blaskopf 1 aus einem Ringspalt gepresst, zu einer Folie 3 geformt und von den Abzugswalzen 5 nach oben gezogen und dabei vom Kühlluftring 2 abgekühlt. Die Innenschlauchkühlung 7 unterstützt den Kühlvorgang. Die Flachlegung 4 legt den Schlauch 3 flach. Der Kalibrierkorb 6 besteht aus einzelnen gebogenen Rundstäben, die so horizontal gedreht werden können, dass sie annähernd einen Kreis ergeben. Dieser Kreis bestimmt mit seinem Durchmesser den Durchmesser des Folienschlauches 3. Auf den Rundstäben sind kleine Kunststoffröllchen montiert, die sich leicht drehen lassen, und die durch die Berührung mit dem Folienschlauch angetrieben werden. Figur 2 zeigt einen solchen Ausschnitt des Kalibrierkorbes. Zur einfacheren Darstellung besteht der gezeigte Kalibrierkorb nur aus 4 gebogenen Elementen 13 mit den Halterungen 13a und 13b. Auf den gebogenen Rundstäben 11 laufen die Kunststoffröllchen 10 und berühren den Folienschlauch 12. Diese Röllchen 10 liegen linienförmig an dem Folienschlauch 12, so dass die von unten kommende Kühlluft zwischen Folienschlauch 12 und Röllchen 10 nicht strömen kann, dadurch wird der Kühleffekt unterbrochen. Außerdem heizen sich die Röllchen 10 auf und behindern dadurch zusätzlich den Kühleffekt.

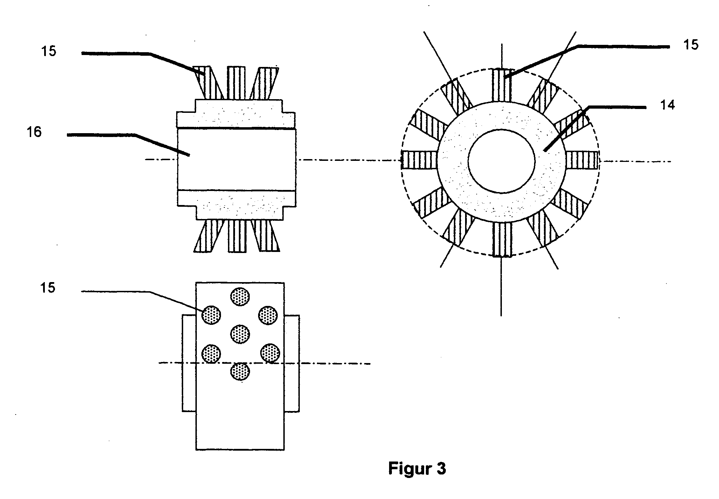

Setzt man statt der Röllchen 10 kleine Scheibenbürsten 16 in Figur 3 ein, sind die gerade beschriebenen Nachteile beseitigt. Diese Scheibenbürsten 16 bestehen aus einem Träger 14, in den die Borstenbüschel 15 eingearbeitet sind. Die Abstand der Borstenbüschel 15 ist so gewählt, dass genügend Kühlluft zwischen den Borsten durch fließen kann. Da die Kontaktflächen zum Folienschlauch 12 nur aus den Borstenspitzen bestehen und somit sehr klein sind, findet so gut wie kein Wärmeübergang statt, d.h. der Folienschlauch kann weiter auskühlen, was erwünscht ist.

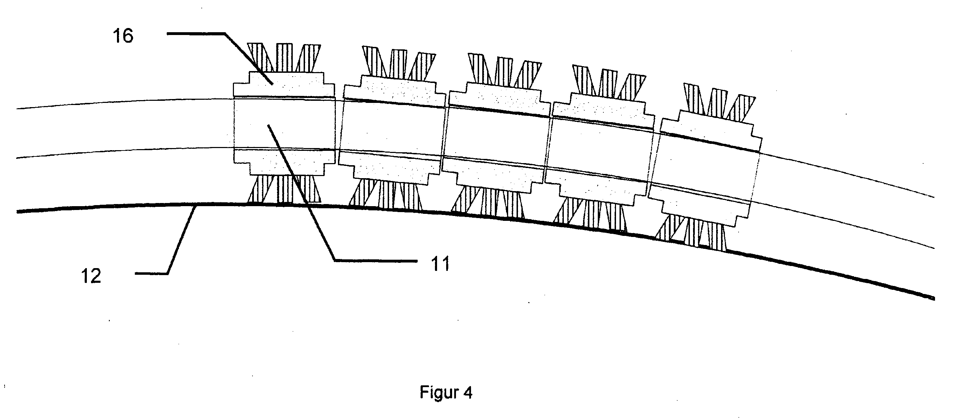

Figur 4 zeigt einen Ausschnitt eines Kalibrierkorbes mit den Bürstenscheiben 16, die auf dem Rundstab 11 laufen und die Folie 12 punktuell berühren.

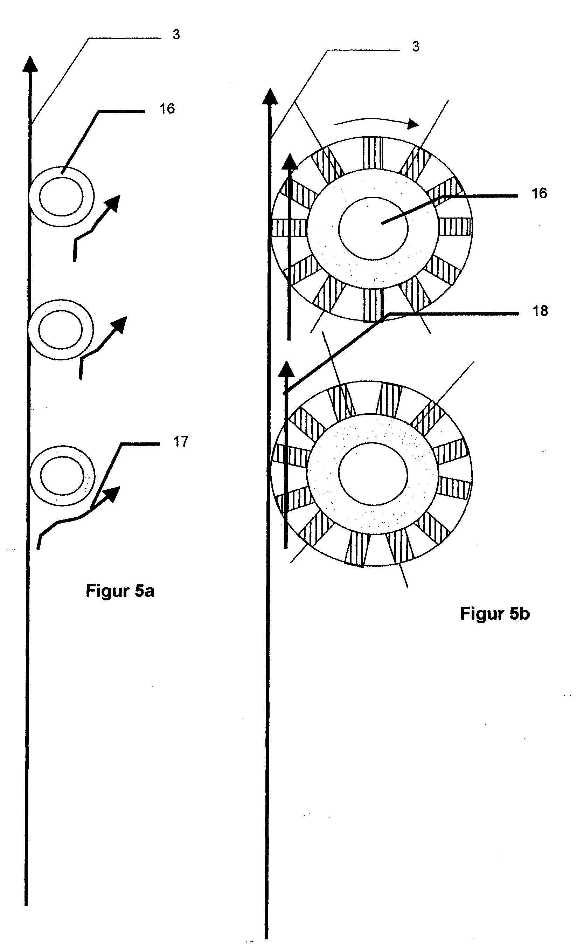

Figur 5a zeigt eine Anordnung von übereinander angeordneten Kunststoffröllchen 10 und den Verlauf der Kühlluft, die abgeleitet wird (Pfeil 17) und für die Kühlung verloren geht. Figur 5b zeigt eine ähnliche Situation mit den Bürstenscheiben 16, wobei der Kühlluftstrom 18 nahezu ungehindert die Borsten durchströmt und der Kühleffekt erhalten bleibt.

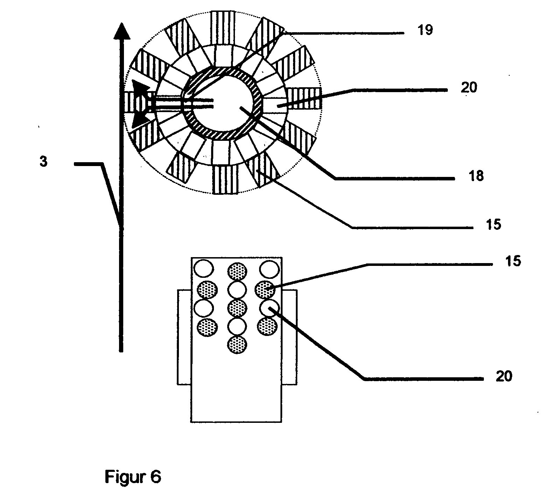

Figur 6 zeigt eine Situation, bei der zusätzliche Kühlluft durch Rohr 18 geblasen wird. Aus dem Rohr 18 strömt die Kühlluft durch die Bohrungen 19 in Richtung Folie 3, wobei der Borstenträger mit einer Vielzahl von Bohrungen 20 versehen ist, durch die die Kühlluft auf den Folienschlauch 3 gelangt und einen zusätzliche Kühlung erreicht.

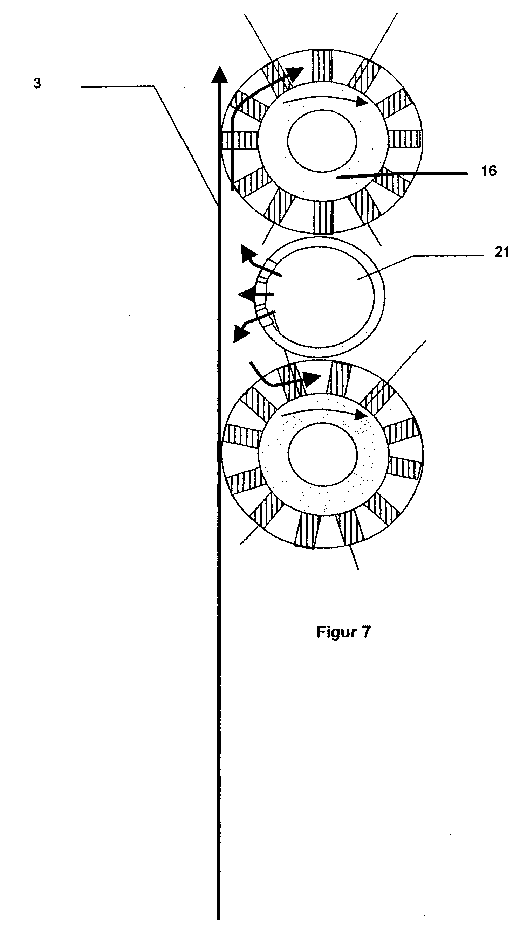

Figur 7 zeigt eine andere Art der zusätzlichen Luftkühlung. In diesem Fall strömt zusätzliche Kühlluft aus dem Rohr 21 direkt auf den Folienschlauch 3.

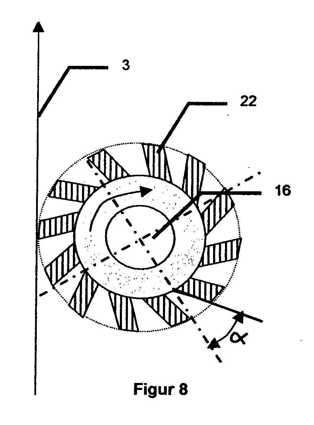

Figur 8 zeigt eine Bürstenscheibe 16, bei der die Borstenbüschel 22 in Laufrichtung gesehen nach hinten gerichtet sind. Dies reduziert den Abpressdruck auf die Folie 3 und reduziert so auch die Gefahr von Markierungen auf der Folie 3. Der Winkel "alpha" kann zweckmäßigerweise zwischen 2° und 50° liegen.

## Patentansprüche

1. Blasfolienanlage mit Kalibrierkorb als Schlauchkalibrierung und/oder Schlauchführung, **dadurch gekennzeichnet, dass** als Führungsröllchen im Kalibrierkorb kleine Scheibenrundbürsten (16) eingesetzt werden.

2. Vorrichtung nach Anspruch 1, **dadurch gekennzeichnet, dass** die Borstenbüschel (15) so angeordnet sind, dass sie außen kreisförmig abgeschnitten sind.

3. Vorrichtung nach Anspruch 1 oder 2, **dadurch gekennzeichnet, dass** die Borstenbüschel (15) so angeordnet sind, dass genügend Luft durch sie hindurch strömen kann.

4. Vorrichtung nach Anspruch 1 bis 3, **dadurch gekennzeichnet, dass** der Träger (14) aus einem Material mit guten Laufeigenschaften besteht.

5. Vorrichtung nach Anspruch 1 bis 3, **dadurch gekennzeichnet, dass** der Rundstab (11) mit einer leichtlaufenden Oberfläche ausgestattet ist.

6. Vorrichtung nach Anspruch 1 bis 5, **dadurch gekennzeichnet, dass** die Borsten (15) aus Kunststoff-Filamenten bestehen.

7. Vorrichtung nach Anspruch 1 bis 5, **dadurch gekennzeichnet, dass** die Borsten (15) aus Naturfasern bestehen.

8. Vorrichtung nach Anspruch 1 bis 7, **dadurch gekennzeichnet, dass** die Scheibenbürsten auf Rohren (18) laufen, durch die Luft durch die Scheibenbürsten auf die Folie geblasen wird.

9. Vorrichtung nach Anspruch 1 bis 7, **dadurch gekennzeichnet, dass** zwischen den einzelnen Ebenen der Scheibenbürsten (16) Luftrohre (21) angeordnet sind, aus denen Luft gegen den Folienschlauch (3) geblasen wird.

10. Vorrichtung nach Anspruch 1 bis 9, **dadurch gekennzeichnet, dass** die Scheibenbürsten (16) mit Borstenbüscheln (22) versehen sind, die in Laufrichtung gesehen, nach hinten gerichtet sind und der Winkel alpha 2°-50° betragen kann.
